# EUROPEAN PATENT SPECIFICATION

(11) **EP 2 958 822 B1**
(45) Date of publication and mention of the grant of the patent: **05.04.2017**
(21) Application number: 14708113.7
(22) Date of filing: 24.02.2014
(51) Int. Cl.: B65D 51/24, G01F 19/00

(54) **PACKAGE COMPRISING A LOW PROFILE SCOOP AND PLURALITY OF LOW PROFILE SCOOPS.**
VERPACKUNG MIT EINER SCHAUFEL MIT NIEDRIGEM PROFIL UND MEHRERER SCHAUFELN MIT NIEDRIGEM PROFIL.
EMBALLAGE CONTENANT UNE CUILLÈRE À PROFIL BAS ET PLURALITÉ DE CUILLERS À PROFIL BAS.

(30) Priority: 22.02.2013 WO PCT/NL2013/050114
(43) Date of publication of application: 30.12.2015
(73) Proprietor: N.V. Nutricia, 2712 HM Zoetermeer (NL)
(72) Inventor: CRUSIUS, Sjors Floris, NL-3584 CT Utrecht (NL); BUNCE, Martin, Wiltshire SN8 4AW (GB)
(74) Representative: Nederlandsch Octrooibureau
(86) International application number: PCT/NL2014/050112
(87) International publication number: WO 2014/129903

(56) References cited:
- WO-A1-2012/087619
- DE-A1- 3 542 504
- NL-C1- 1 023 615
- US-A- 5 137 316
- US-A1- 2005 034 310
- US-A1- 2012 079 881

## Description

### BACKGROUND OF THE INVENTION

### Field of the Invention

The present invention relates to the combination of a scoop for dosing powered infant nutrition or milk formula, with a package having limited head space in which the scoop can be retained prior to use.

The invention relates furthermore to a plurality of stackable low profile scoops for dosing for dosing powered infant formula.

### Description of the Related Art

Powdered material, such as infant milk formula, has been sold in various forms of package for many years. Metal cans were initially the preferred container as they were relatively easy and cheap to produce and could be sealed for long term storage. The seal comprised an aluminium foil across the mouth of the container that was removed on first use. As a single container would be used for an extended period, the containers were provided with re-closable plastic lids which gripped over the outer rim of the can. A measuring scoop was frequently included with the container, either packaged separately or within the can itself.

More recently, alternative packaging forms have become available which improve on the existing cans. These include plastic and foil laminate container bodies and hinged lid assemblies having a facility to receive and retain a measuring scoop. In particular, it has been found desirable that the scoop is not included within the product containing space as this may require more stringent requirements on the scoop production and introduction of the scoop at a late production stage is excluded. One such package is described in US 2008041861, having a seal for initially closing the package and a space between the seal and an upper edge of the container for partially receiving the scoop prior to use. By distancing the seal from an upper edge of the container, additional space can be provided for the scoop without requiring variation in the design of the lid assembly. It will be understood that this can be important in cases where a number of scoops of different sizes may be required. Another package is shown in WO 2012/087619, which includes a scoop supported on its side within the headspace of the lid.

More recent packaging designs have sought to reduce the unused space within the package. It would therefore be desirable to provide an alternative scoop construction that can assist in reducing such unused space. Additionally, it would be desirable to provide a scoop and package combination which can be adapted to different sizes of scoop.

### BRIEF SUMMARY OF THE INVENTION

The invention relates to a package for powered infant formula according to claim 1.

According to the invention, there is provided a low profile scoop for dosing of powdered infant formula, the scoop having a handle portion and a bowl with an open mouth and a closed underside, wherein the bowl has a width that is relatively smaller than both its length and its depth. As a result of this configuration, the scoop can be located in a sideways position within the lid of a package having low head space. Furthermore, scoops of different volume can vary in the depth of the bowl without requiring any greater headspace within the package due to the sideways orientation of the scoop. In the present context, headspace is intended to denote the space between the upper surface of the product or a covering membrane and the underside of the lid i.e. the space available for storing the scoop. Furthermore, the depth dimension of the scoop is that extending from the mouth to the underside; the length dimension is that directed in a direction generally aligned with the handle portion; and the width dimension is directed transverse to the handle portion.

The scoop is provided within the package and may be located above the membrane seal prior to use. It is also conceivable that the scoop is integrally formed with the lid construction and separated at first use.

Preferably, the bowl may have a mouth of generally rectangular shape. More preferably, the bowl has generally flat parallel side walls extending in the length direction and curved end walls extending in the width direction. The closed underside of the scoop may also be flat. It will be understood that the scoop is not intended for use while eating and the term scoop is not intended to refer to a spoon such as used for insertion into a user's mouth.

In one embodiment, the bowl may be no wider than the handle portion. In another embodiment the mouth has a width corresponding approximately to the width of the handle portion. In this manner effective use of the head space within the package can be maximised.

In certain embodiments, the depth of the bowl is greater than its length. Such a configuration allows for increased volume scoops while maintaining the ability to stack with smaller volume scoops having the same length dimension. It also ensures that gripping portions within the lid can be standardised for different volumes of scoop. In one embodiment, the length of the bowl is around 50% greater than its width.

Most preferably, the scoop is stackable and has a tapered or stepped bowl that can nest together with another scoop of similar shape. Although in use of the scoop, stacking may not be required, during production and transport of the scoops, stacking may be advantageous.

Tapering may be achieved in various ways. In one case, the bowl may be tapered from the mouth to the underside with a taper angle of less than 8°, preferably less than 6° and most preferably around 4.5° in both width and length directions. In this context, the taper angle is given as the angle with respect to a centre line or plane of symmetry of the bowl. In another embodiment, scoops may be stepped, whereby a narrower lower portion can fit within a wider mouth portion.

According to a still further embodiment, an elongate opening is provided through the handle portion adjacent to the bowl. This avoids accumulation of milk powder on the handle portion during scooping. The handle portion may also include more than one opening. It has been found advantageous if the elongate opening has a largest dimension that is less than a width of the scoop handle. This can prevent unwanted tangling of scoops during production due to handles becoming engaged through the openings of other scoops.

The scoop may have any appropriate volume for the required dosing purpose. Preferably, the scoop will have a bowl volume of between 8 ml and 11.5 ml. Nevertheless, scoops of larger and smaller volumes may be available for specific dosage regimes including scoops as large as 20 ml and as small as 5 ml. In terms of other dimensions, the bowl preferably has a width at the mouth of less than 30 mm, more preferably less than 24 mm and most preferably around 20 mm. The bowl preferably has a length at the mouth of around 30 mm but may vary from around 20 mm to around 40 mm. The primary variable is the depth, which may vary from around 20 mm to around 50 mm. In particular, for a scoop with a mouth of 28 mm in length and 19 mm in width, the depth dimension may be around 35 mm for a scoop volume of 11.5 ml; 22 mm for a scoop volume of 8 ml; and 27 mm for a scoop volume of 9.5 ml. The present invention is particularly applicable to scoops having a bowl with a depth that is at least 50% greater than the width at the mouth. The length of the handle portion may be around 70 mm.

The scoop is preferably provided with arrangements for improving filling and release of milk powder or the like. In order to ensure dosing accuracy, the scoop should be accurately filled without the occurrence of air spaces or voids. It should also empty completely on inverting the scoop without excess agitation. As the scoop gets deeper and narrower, these requirements can become more difficult to achieve. Increasing a taper angle of the scoop may assist emptying but at the expense of loss of volume. Preferably, one or more small openings are provided through the closed underside of the bowl. These help to prevent vacuum formation on emptying of the scoop, while being too small for passage of powdered formula. It is thus understood that the term "closed underside' must be interpreted to include such small openings.

Another way in which better filling of the bowl of the scoop may be achieved is by providing the underside of the bowl with a transition section providing an extended transition between the underside and an end wall of the bowl that is relatively less abrupt than a transition between the underside and sidewalls of the bowl. The extended transition may be a section at around 45° to the bottom of the scoop and may have a length of at least 8 mm. Alternatively, the extended transition may be a large radius curved transition having a radius of e.g. more than 8 mm. This transition may be relatively greater than that between the sidewalls and the underside, which may have a radius of less than 1 mm. The extended transition may be provided at just one end of the scoop e.g. closest to the handle or may be provided at both ends.

The scoop may be made of any suitable plastics material, most preferably from injection moulded polypropylene.

The invention therefore relates to a package for powdered infant nutrition comprising a tub defining a product containing space and a lid, a quantity of powdered infant nutrition within the product containing space and a membrane seal closing the product containing space prior to use, the package further comprising a scoop as defined above, placed on its side above the seal within a headspace of the lid. The headspace defined as the region between the seal and the lid may be less than 30 mm in height, preferably less than 25 mm in height or around 20 mm in height, as measured at the location of the scoop. The scoop is preferably dimensioned to take full advantage of this headspace. Preferably, the width of the bowl of the scoop is no more than 4 mm less than this headspace, more preferably no more than 3 mm less and preferably around 2 mm less. In other words, the height of the headspace exceeds the width of the bowl of the scoop no more than by the disclosed amounts. In certain circumstances, the scoop may even completely fill the headspace and bear against the membrane seal. The membrane seal may comprise a metal foil or may be a plastics-only foil. A preferred material comprises polypropylene outer layers with a barrier layer of e.g. EVOH laminated therebetween. It may be removed in its entirety prior to use or may comprise a weakened tear line defining an opening region, and a pull tab. The headspace should be sufficient that the scoop cannot cause damage to the seal. In particular, it should be excluded that undesired leakage or puncture of the seal occurs or any damage that might cause gas leakage and oxygen to enter the package. It will be understood that a purpose of the seal is to prevent oxidation of the contents, which can lead to reduced shelf life.

The scoop may be located loosely within the headspace. More preferably, the lid has a clip on its underside to grip the handle portion of the scoop and the scoop is gripped by the clip. On opening the lid, the scoop may be removed from the clip. It will be understood that the scoop may be permanently formed with the lid or clip e.g. by a frangible connection. In general such connections may be less desirable due to the risk of particles falling into the product containing space.

In a most preferred embodiment, the tub is a thermoformed tub of relatively thin plastic material having a peripheral wall extending to an upper edge defining the product containing space, and wherein the lid is hinged to an upper rim, engaged to the upper edge of the tub. The lid and rim may be integrally formed together with a living hinge e.g. by injection moulding. Preferred materials for the lid and rim are polypropylene (PP), polyethylene (PE) and polyethylene terephthalate (PET) or combinations thereof, although the skilled person will be familiar with various alternatives which could provide similar engineering properties.

The package may have a generally square or rectangular outer profile with rounded corners. The volume of the package may be between 500 ml and 3 litres, preferably between around 2 litres and 800 ml, and the access opening preferably has a minimum dimension of at least 70 mm more preferably around 100 mm and an area of at least 100 cm². The overall length of the package may be between 150 mm and 250 mm, preferably about 185 mm. The width of the package may be between 100 mm and 150 mm, preferably around 120 mm. The package may be available in multiple heights according to volume required, varying from 80 mm to 150 mm.

The invention further relates to a plurality of scoops as described above, the scoops being stackable together by nesting of their bowls and having different volumes by varying their depths while maintaining the width and length dimensions identical. Such a set of similar scoops allows a standard package having a low head space to be implemented. According to the dosing requirements of the powdered content, a scoop of the requisite volume may be added to the package. The scoops may be colour coded according to their volume.

### BRIEF DESCRIPTION OF THE DRAWINGS

The features and advantages of the invention will be further appreciated upon reference to the following drawings of a number of exemplary embodiments, in which:
Figure 1 shows a package according to one aspect of the present invention in perspective view;
Figure 2 shows a cross-section through the package of Figure 1;
Figure 3 shows a scoop according to a first embodiment of the invention in perspective view;
Figure 4 shows a scoop according to a second embodiment of the invention in perspective view;
Figure 5 shows the scoop of Figure 4 in plan view;
Figure 6 shows a scoop according to a third embodiment of the invention in perspective view; and
Figure 7 shows a scoop according to a fourth embodiment of the invention in perspective view.

### DESCRIPTION OF ILLUSTRATIVE EMBODIMENTS

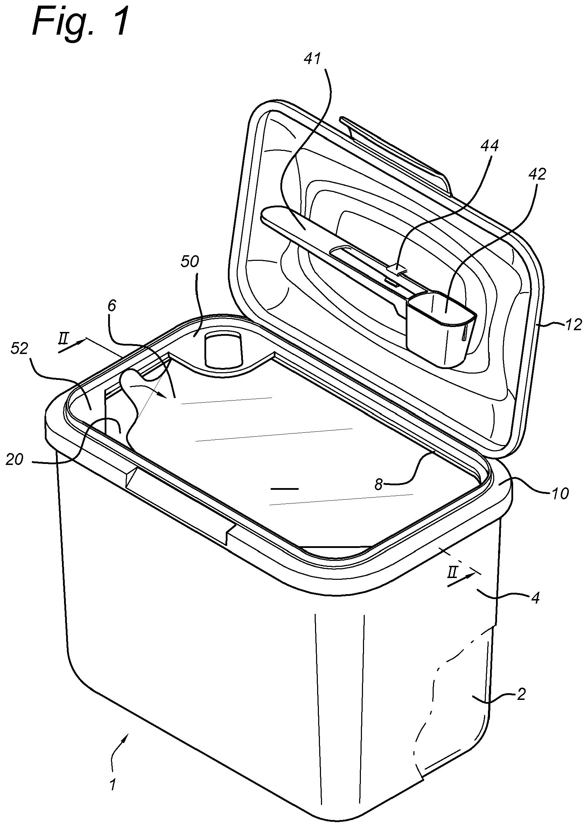

Figure 1 shows a perspective view of a package 1 for powdered infant nutrition according to a first embodiment of the invention comprising a tub 2 defining a product containing space 20 and a lid 12. A quantity of powdered infant nutrition is located within the product containing space 20 and a membrane seal 6 is shown in a partially removed condition. The lid 12 is hinged to an upper rim 10 that engages mechanically with a lower rim 8, connected to the tub 2. It will be understood that other lid assemblies may also be used in this context. The tub 2 is thermoformed of relatively thin polypropylene material and a sleeve 4 formed of carton supports around it.

Within the lid 12 is located a scoop 42 according to the present invention. The scoop 42 has a handle portion 41, which is gripped by a clip 44 on the underside of the lid 12. The scoop 42 is conveniently shaped to be relatively narrow, allowing it to be placed on its side within the limited head space within the lid 12. The handle portion 41 has an open structure, which is convenient for preventing a build-up of powder on the handle portion 41 when in use. The lower rim 8 also incorporates a scoop holder 50 and left and right-handed levellers 52. After use of the scoop 42, it may be placed in the scoop holder 50. It will be noted that the scoop holder 50 has an elongate generally rectangular shape that corresponds to that of the scoop 42 and orientates the handle portion 41 of the scoop 42 to a position where it can be easily grasped by a user.

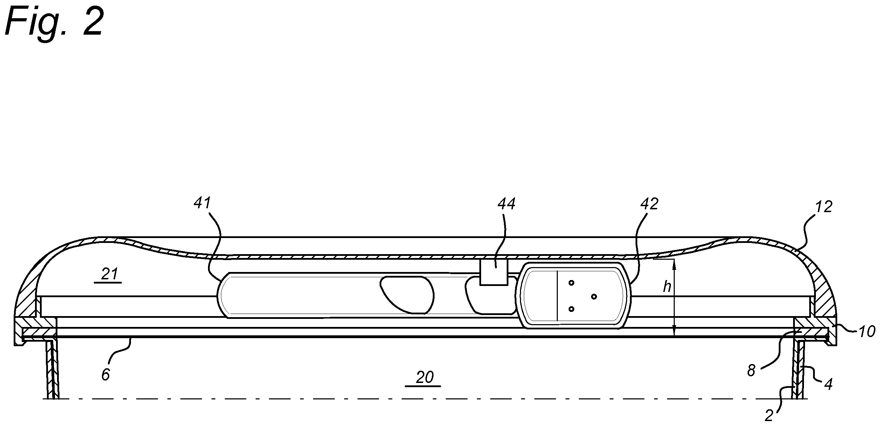

Figure 2 shows a cross-section through the package of Figure 1, taken along line II-II, with the lid closed, prior to removal of the seal 6. As can be seen in this view, the seal 6 closes off the product containing space 20 and lies beneath the lower rim 8. The upper rim 10 and the lid 12 define a headspace 21 above the seal 6. The headspace 21 has a minimum height h, measured at the centre of the lid 12. As can be seen, the scoop 42 is slightly narrower than the height h of the headspace, such that it can be positioned without interfering with the seal 6. It will be understood, that while the scoop 12 is illustrated with its handle portion 41 gripped by the clip 44, it may also be simply placed on the seal 6 during the manufacturing process.

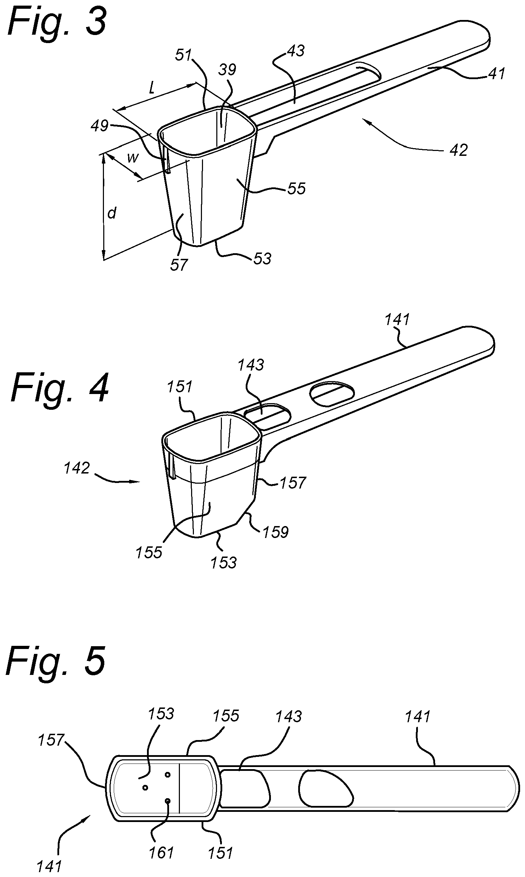

Figure 3 shows in greater detail the scoop 42 of Figure 1, including an elongate opening 43 through the handle portion 41. The bowl 51 of the scoop 42 has a width w that is relatively smaller than both its length 1 and its depth d. The bowl 51 has a mouth 39 of generally rectangular shape with a width corresponding approximately to the width of the handle portion 41. The bowl 51 has generally flat parallel side walls 55 extending in the length direction and curved end walls 57 extending in the width direction. The walls 55, 57 of the bowl 51 taper towards a slightly narrower closed underside 53 with a taper angle of around 4.5° in both width and length directions. This allows convenient stacking together of scoops during manufacture and transport. At the end wall 57 opposite to the handle portion 41, the bowl 51 has a small nose 49, which assists during stacking by preventing the bowl of one scoop from inserting too deeply into the bowl of another scoop.

The illustrated scoop 42 has a mouth 39 of 28 mm in length and 19 mm in width. The depth dimension of around 35 mm ensures a scoop volume of 11.5 ml. By varying just the depth dimension, different scoop volumes may be provided while maintaining the same overall design. In particular, a scoop volume of 8 ml may be provided having a scoop depth of 22 mm and a scoop volume of 9.5 ml may have a depth dimension of 27 mm.

Figure 4 shows a scoop 142 according to one preferred embodiment of the invention, in which similar features are provided like references preceded by 100. This scoop 142 has a bowl 151 of similar shape to that of Figure 3. In particular, the depth d in this embodiment is at least 50% greater than the width w of the bowl 151. The scoop 142 differs from that of Figure 3 in that the underside 153 of the bowl 151 has a transition section 159 between the underside 153 and an end wall 157 of the bowl 151 closest to the handle portion 141. The transition section 159 provides an extended transition that is relatively less abrupt than a transition between the underside 153 and the sidewalls 155 of the bowl 151. These latter portions may form corners with radii of around 1 mm or less. The transition section 159 may have a length of more than 5 mm and may be angled at between 30° and 60° with respect to the underside 153.

According to one aspect of the invention, it has been found that low profile scoops i.e. those having a relatively narrow width compared to their depth and length directions can be difficult to fill accurately. Accurate filling is important in order to ensure correct dosing. In some cases, air pockets may be formed towards the underside of the bowl during filling, in particular in the corners between the underside and the end walls. By providing a transition section 159 as shown in Figure 4, smoother and more accurate filling may be achieved without formation of air pockets. It will be understood that other provisions may assist filling and that the transition section could be curved or otherwise formed.

Figure 4 also illustrates that the handle portion 141 has a slightly different form to that of Figure 3. In particular, the handle portion is provided with two elongate openings 143, each of which is smaller than a width of the handle portion 141. In this manner, it can be avoided that a handle portion of one scoop becomes lodged in an opening of another scoop during production and transport.

Figure 5 shows the scoop 141 of Figure 4 in plan view. In this view, the parallel sidewalls 155 and the curved end walls 157 are better visible. Furthermore, the underside 153 of the bowl 151 can be seen to have three small openings 161. These openings 161 are too small to allow passage of the powdered product but can pass air in order to avoid voids during filling of the scoop and vacuum formation on emptying.

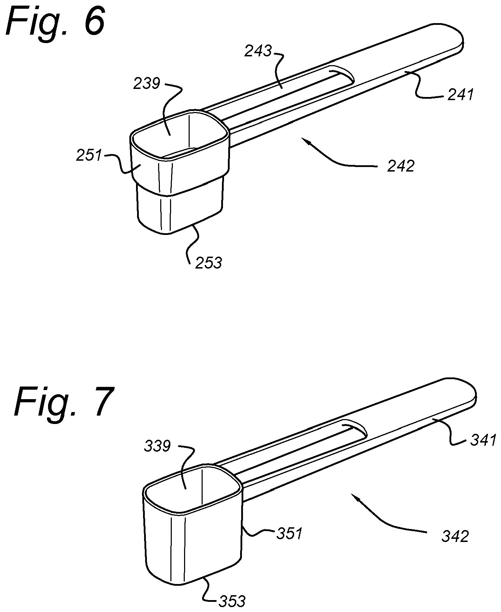

Figure 6 shows an alternative scoop 242 having a handle portion 241 similar to that of Figure 3 with an elongate opening 243. The scoop 242 differs from the earlier design of Figure 3 in that the bowl 251 has a stepped structure. The mouth 239 has the same width as the handle portion 241 but the bowl 251 no longer tapers downwards. Instead, it has a constant cross-section to a step 250 at a mid-point of the bowl and then a smaller constant cross-section extending to the closed underside 253. Scoops 242 of this design may stack or nest together with the bowl 251 of one scoop extending into the next scoop up to the step 250. As above, different volumes may be provided by varying the depth of the bowl 251 with the step 250 preferably always being located at the mid-point.

Figure 7 shows a still further design of scoop 342 having a relatively simple structure of bowl 351. In this design, the handle portion 341 is identical to Figure 3 but the bowl 351 has a constant cross-section from mouth 339 to underside 353 and is not stackable. The skilled person will understand that many other alternative configurations of scoop may be provided and that the design of the scoop may be adapted to the design of the container assembly itself.

Thus, the invention has been described by reference to certain embodiments discussed above. It will be recognized that many modifications in addition to those described above may be made to the structures and techniques described herein without departing from the scope of the invention. Accordingly, although specific embodiments have been described, these are examples only and are not limiting upon the scope of the invention.

## Claims

1. A package (1) for powdered infant formula comprising a tub (2) defining a product containing space (20) and a lid (12), a quantity of powdered infant formula within the product containing space and a membrane seal (6) closing the product containing space prior to use, the package further comprising a low profile scoop (42) for dosing the powdered infant formula, the scoop being placed on its side above the seal within a headspace of the lid and having a handle portion (41) and a bowl (51) with an open mouth (39) and a closed underside (53), **characterised in that** the bowl has a width (w) that is relatively smaller than both its length (1) and its depth (d) with generally flat parallel side walls (55) extending in the length direction and curved end walls (57) extending in the width direction.

2. Package according to claim 1, wherein the mouth has
a width corresponding to the width of the handle portion and/or the depth of the bowl is greater than its length and/or the length of the bowl is around 50% greater than its width.

3. Package according to any preceding claim, wherein the scoop is stackable and has a tapered or stepped bowl that can nest together with another scoop of similar shape, preferably being tapered from the mouth to the underside with a taper angle of less than 6° in both width and length directions.

4. Package according to any preceding claim, wherein an elongate opening (43) is provided through the handle portion adjacent to the bowl, the elongate opening optionally having a largest dimension that is less than a width of the scoop handle.

5. Package according to any preceding claim, wherein the bowl has a volume of between 8 ml and 11.5 ml.

6. Package according to any preceding claim, further comprising one or more small openings (161) through the closed underside of the bowl to prevent vacuum formation on emptying of the scoop.

7. Package according to any preceding claim, wherein the underside of the bowl is generally flat.

8. Package according to any preceding claim, wherein the underside of the bowl has a transition section (159) providing an extended transition between the underside and an end wall of the bowl that is relatively less abrupt than a transition between the underside and sidewalls of the bowl.

9. Package according to any preceding claim, the scoop consisting of injection moulded polypropylene.

10. Package according to any preceding claim, wherein the lid has a clip (44) on its underside to grip the handle portion of the scoop and the scoop is gripped by the clip.

11. Package according to any preceding claim, wherein the tub is a thermoformed tub of relatively thin plastic material having a peripheral wall extending to an upper edge defining the product containing space, and wherein the lid is hinged to an upper rim (10), engaged to the upper edge of the tub.

12. Package according to any preceding claim, wherein the headspace, defined as the region between the membrane seal and the underside of the lid, has a height of no more than 4 mm, preferably no more than 3 mm, more preferably no more than 2 mm greater than a width of the bowl of the scoop.

13. A plurality of low profile scoops for dosing of powdered infant formula, **characterised in that** each scoop has a handle portion and a bowl with an open mouth and a closed underside, wherein the bowl has a width that is relatively smaller than both its length and its depth, the scoops being stackable together by nesting of their bowls and having different volumes by varying their depths while maintaining the width and length dimensions identical.

14. The plurality of scoops according to claim 13, wherein the scoops are colour coded according to their volume.

15. The plurality of scoops according to claim 13 or claim 14, wherein each scoop is a scoop as defined in any of claims 1 to 12.

## Patentansprüche

1. Eine Verpackung (1) für eine pulverförmige Säuglingsanfangsnahrung, die Folgendes aufweist: einen Behälter bzw. eine Wanne (2), die einen ein Produkt enthaltenen Raum (20) definiert, einen Deckel (12), eine Menge an pulverförmiger Säuglingsanfangsnahrung innerhalb des das Produkt enthaltenen Raums und eine Membrandichtung (6), die den das Produkt enthaltenen Raum vor der Verwendung abschließt, wobei die Verpackung weiter einen Löffel (42) mit einem niedrigen Profil zum Dosieren der pulverförmigen Säuglingsanfangsnahrung aufweist, wobei der Löffel auf der Seite liegend über der Dichtung innerhalb eines Freiraums des Deckels angeordnet ist und einen Griffteil (41) und einen Napf (51) mit einer offenen Öffnung (39) und einer geschlossenen Unterseite (53) hat, **dadurch gekennzeichnet dass** der Napf eine Breite (w) hat, die relativ kleiner ist als sowohl dessen Länge (I) und dessen Tiefe (d) mit im Allgemeinen flachen parallelen Seitenwänden (55), die sich in der Längsrichtung erstrecken, und gebogenen Endwänden (57), die sich in der Breitenrichtung erstrecken.

2. Verpackung nach Anspruch 1, wobei die Öffnung eine Breite hat, die der Breite des Griffteils entspricht und/oder die Tiefe des Napfes größer ist als seine Länge und/oder die Länge des Napfes ungefähr 50% größer ist als seine Breite.

3. Verpackung gemäß einem vorhergehenden Anspruch, wobei der Löffel stapelbar ist und einen sich verjüngenden oder abgestuften Napf hat, der mit einem anderen Löffel einer ähnlichen Form ineinander gesteckt werden kann, wobei er sich vorzugsweise von der Öffnung zur Unterseite mit einem Verjüngungswinkel von weniger als 6° in sowohl der Breiten- als auch der Längsrichtung verjüngt.

4. Verpackung nach einem vorhergehenden Anspruch, wobei eine längliche Öffnung (43) durch den Griffteil angrenzend an den Napf vorgesehen ist, wobei die längliche Öffnung optional eine längste Abmessung hat, die geringer ist als eine Breite des Löffelgriffes.

5. Verpackung nach einem vorhergehenden Anspruch, wobei der Napf ein Volumen zwischen 8 ml und 11,5 ml hat.

6. Verpackung nach einem vorhergehenden Anspruch, die weiter eine oder mehrere kleine Öffnungen (161) durch die geschlossene Unterseite des Napfes aufweist, um eine Vakuumbildung beim Leeren des Löffels zu verhindern.

7. Verpackung nach einem vorhergehenden Anspruch, wobei die Unterseite des Napfes im Allgemeinen flach ist.

8. Verpackung nach einem vorhergehenden Anspruch, wobei die Unterseite des Napfes einen Übergangsabschnitt (159) hat, der einen erweiterten Übergang zwischen der Unterseite und einer Endwand des Napfes vorsieht, der relativ weniger abrupt ist als ein Übergang zwischen der Unterseite und den Seitenwänden des Napfes.

9. Verpackung nach einem vorhergehenden Anspruch, wobei der Löffel aus spritzgegossenem Polypropylen besteht.

10. Verpackung nach einem vorhergehenden Anspruch, wobei der Deckel einen Clip bzw. eine Klemme (44) auf seiner Unterseite hat, um den Griffteil des Löffels zu fassen und wobei der Löffel durch den Clip erfasst wird.

11. Verpackung nach einem vorhergehenden Anspruch, wobei die Wanne eine thermogeformte bzw. wärmegeformte Wanne aus einem relativ dünnen Plastikmaterial mit einer Außenwand ist, die sich bis zu einer oberen Kante erstreckt, welche den das Produkt enthaltenen Raum definiert, und wobei der Deckel aufklappbar bzw. schwenkbar an einem oberen Rand (10) angebracht ist, der mit der oberen Kante der Wanne in Eingriff ist.

12. Verpackung nach einem vorherigen Anspruch, wobei der Freiraum, der als der Bereich zwischen der Membrandichtung und der Unterseite des Deckels definiert ist, eine Höhe von nicht mehr als 4 mm, vorzugsweise nicht mehr als 3 mm, noch bevorzugter von nicht mehr als 2 mm mehr als eine Breite des Napfes des Löffels hat.

13. Eine Vielzahl von Löffeln mit niedrigem Profil zum Dosieren von pulverförmiger Säuglingsanfangsnahrung, **dadurch gekennzeichnet, dass** jeder Löffel einen Griffteil und einen Napf mit einer offenen Öffnung und einer geschlossenen Unterseite hat, wobei der Napf eine Breite hat die relativ kleiner ist als sowohl seine Länge als auch seine Tiefe, wobei die Löffel gestapelt werden können durch Ineinanderstecken ihrer Näpfe und wobei sie unterschiedliche Volumen haben durch Variieren ihrer Tiefen, während die Breiten- und Längenabmessungen identisch gehalten werden.

14. Vielzahl von Löffeln gemäß Anspruch 13, wobei die Löffel gemäß ihrem Volumen farbcodiert sind.

15. Vielzahl von Löffeln gemäß Anspruch 13 oder Anspruch 14, wobei jeder Löffel ein Löffel nach einem der Ansprüche 1 bis 12 ist.

## Revendications

1. Emballage (1) pour formule en poudre pour nourrisson comprenant un pot (2) définissant un espace de confinement de produit (20) et un couvercle (12), une quantité de formule en poudre pour nourrisson à l'intérieur de l'espace de confinement de produit et un joint d'étanchéité à membrane (6) fermant l'espace de confinement de produit avant l'utilisation, l'emballage comprenant en outre une cuiller à profil bas (42) pour doser la formule en poudre pour nourrisson, la cuiller étant placée sur son côté au-dessus du joint d'étanchéité à l'intérieur d'une espace de tête du couvercle et ayant une partie de manche (41) et un cuilleron (51) avec une embouchure ouverte (39) et une face inférieure fermée (53), **caractérisé en ce que** le cuilleron présente une largeur (w) qui est relativement plus petite que sa longueur (1) et sa profondeur (d) avec des parois latérales (55) généralement plates parallèles s'étendant dans le sens de la longueur et des parois d'extrémité incurvées (57) s'étendant dans le sens de la largeur.

2. Emballage selon la revendication 1, dans lequel l'embouchure a une largeur correspondant à la largeur de la partie de manche et/ou la profondeur du cuilleron est supérieure à sa longueur et/ou la longueur du cuilleron est environ 50% plus grande que sa largeur.

3. Emballage selon l'une quelconque des revendications précédentes, dans lequel la cuiller peut être empilée et présente un cuilleron progressivement rétréci ou étagé qui peut s'emboîter avec une autre cuiller de forme similaire, de préférence étant progressivement rétrécie à partir de l'embouchure jusqu'à la face inférieure avec un angle de conicité inférieur à 6° à la fois dans les sens de la largeur et de la longueur.

4. Emballage selon l'une quelconque des revendications précédentes, dans lequel une ouverture allongée (43) est prévue à travers la partie de manche adjacente au cuilleron, l'ouverture allongée ayant facultativement la plus grande dimension qui est inférieure à une largeur du manche de la cuiller.

5. Emballage selon l'une quelconque des revendications précédentes, dans lequel le cuilleron a un volume compris entre 8 ml et 11,5 ml.

6. Emballage selon l'une quelconque des revendications précédentes, comprenant en outre une ou plusieurs petites ouvertures (161) à travers la face inférieure fermée du cuilleron pour empêcher la formation de vide lors du vidage de la cuiller.

7. Emballage selon l'une quelconque des revendications précédentes, dans lequel la face inférieure du cuilleron est généralement plate.

8. Emballage selon l'une quelconque des revendications précédentes, dans lequel la face inférieure du cuilleron a une section de transition (159) fournissant une transition étendue entre la face inférieure et une paroi d'extrémité du cuilleron qui est relativement moins abrupte qu'une transition entre la face inférieure et les parois latérales du cuilleron.

9. Emballage selon l'une quelconque des revendications précédentes, la cuiller se composant de polypropylène moulé par injection.

10. Emballage selon l'une quelconque des revendications précédentes, dans lequel le couvercle présente une attache (44) sur sa face inférieure pour saisir la partie de manche de la cuiller et la cuiller est saisie par l'attache.

11. Emballage selon l'une quelconque des revendications précédentes, dans lequel le pot est un pot thermoformé en matière plastique relativement fine ayant une paroi périphérique s'étendant jusqu'à un bord supérieur définissant l'espace de confinement de produit, et dans lequel le couvercle est articulé à un rebord supérieur (10) mis en prise sur le bord supérieur du pot.

12. Emballage selon l'une quelconque des revendications précédentes, dans lequel l'espace de tête, définie comme étant la région située entre le joint d'étanchéité à membrane et la face inférieure du couvercle, a une hauteur non supérieure à 4 mm, de préférence non supérieure à 3 mm, encore de préférence non supérieure à 2 mm, supérieure à une largeur du cuilleron de la cuiller.

13. Pluralité de cuillers à profil bas pour doser une formule en poudre pour nourrisson, **caractérisée en ce que** chaque cuiller présente une partie de manche et un cuilleron avec une embouchure ouverte et une face inférieure fermée, dans laquelle le cuilleron présente une largeur qui est relativement plus petite que sa longueur et sa profondeur, les cuillers pouvant être empilées ensemble en emboîtant leurs cuilleron et ayant des volumes différents en modifiant leurs profondeurs tout en conservant les dimensions de largeur et de longueur identiques.

14. Pluralité de cuillers selon la revendication 13, dans laquelle les cuillers sont codées par couleur selon leur volume.

15. Pluralité de cuillers selon la revendication 13 ou la revendication 14, dans laquelle chaque cuiller est une cuiller selon l'une quelconque des revendications 1 à 12.
